# EUROPÄISCHE PATENTSCHRIFT

(11) **EP 3 540 871 B1**
(45) Veröffentlichungstag und Bekanntmachung des Hinweises auf die Patenterteilung: **07.06.2023**
(21) Anmeldenummer: 18161211.0
(22) Anmeldetag: 12.03.2018
(51) Int. Cl.: H01R 24/76, H01R 103/00, H02G 3/12

(54) **HÖHENVERSTELLBARER STECKDOSENSOCKEL UND STECKDOSE MIT DIESEM STECKDOSENSOCKEL**
HEIGHT-ADJUSTABLE SOCKET BASE AND SOCKET WITH THIS BASE
SOCLE DE PRISE DE COURANT AJUSTABLE EN HAUTEUR ET PRISE DE COURANT AVEC CE SOCLE

(43) Veröffentlichungstag der Anmeldung: 18.09.2019
(73) Patentinhaber: Heinrich Kopp GmbH, 63796 Kahl am Main (DE)
(72) Erfinder: Pinzón Caballero, José, 60388 Frankfurt (DE)
(74) Vertreter: Metten, Karl-Heinz

(56) Entgegenhaltungen:
- DE-A1- 10 029 222
- DE-U1- 7 728 676

## Beschreibung

Die vorliegende Erfindung betrifft einen höhenverstellbaren Steckdosensockel und eine Steckdose mit dem Steckdosensockel.

Steckdosensockel sind aus dem Stand der Technik hinreichend bekannt.

Die DE 198 356 31 C2 offenbart eine in eine Gerätedose, insbesondere Unterputzdose einbaubare elektrische Installationseinrichtung, insbesondere in Form einer Antennensteckdose, einer Stromnetzdose oder eines Lichtschalters mit einer rückstellbaren Spreizeinrichtung zur Verankerung der Installationseinrichtung in der Gerätedose.

Die DE 4 032 142 A1 offenbart eine Steckdose mit einem Tragring für einen Sockel, der auf gegenüberliegenden Seiten je eine zweischenkelige Spreizkralle aufweist, die durch je eine Stellschraube aus einer Ruhelage in eine Arbeitslage überführbar ist, in welcher die Krallen in benachbarte Wandbereiche einer Unterputzdose eindringen und denen Rückstellmittel zugeordnet sind.

Die DE 196 235 45 C2 betrifft eine Steckdose zur lösbaren Befestigung in der Einbauöffnung einer Gehäusewand, mit einem mehrteiligen Dosengehäuse zur Aufnahme eines Steckers, welches einen an der Frontseite der Gehäusewand anliegenden Anschlagflansch aufweist, mit einem Kontaktträger zum Anschluss von elektrischen Zuleitungen, und mit federnden Spreizelementen.

Die DE 100 29 222 A1 stellt ab auf ein elektrisches Installationsgerät für den Einbau in eine Einbauöffnung, beispielsweise einer Installationsdose oder dergleichen, mit einem Tragring und mit einem Sockel, wobei der Tragring aus einer Ringplatte und aus von der Ringplatte im Wesentlichen senkrecht abstehenden Füßen besteht, die bei Befestigung des Sockels am Tragring jeweils mit einer dem Sockel zugewandten Anlagefläche an einer jeweils komplementären Auflagefläche des Sockels zur Anlage kommen. Ein solches elektrisches Installationsgerät soll sich dadurch auszeichnen, dass die Anlagefläche und/oder die Auflagefläche aus zwei Teilflächen besteht, die über eine Länge der Füße oder eine sich in gleicher Richtung wie diese Länge erstreckende Höhe des Sockels hin in unterschiedlichen Positionen angeordnet sind, wobei in zwei unterschiedlichen parallel zur Ebene der Ringplatte gedrehten Relativpositionen des Sockels zum Tragring jeweils unterschiedliche Teilflächen der Anlagefläche an der Auflagefläche oder unterschiedliche Teilflächen der Auflagefläche an der Anlagefläche anliegen und auf diese Weise unterschiedliche Abstände zwischen der Ringplatte und dem Sockel festlegen. Ein solches elektrisches Installationsgerät soll an zwei unterschiedliche Tiefen von Installationsdosen bzw. an unterschiedliche Abstände zwischen der Ringplatte und dem Sockel anpassbar sein und so eine hohe Montagefreundlichkeit gewährleisten und den Lagerhaltungsaufwand minimieren helfen.

Ein Nachteil bisheriger Steckdosensockel ist, dass diese im Regelfall nur für spezielle Steckdosentypen geeignet sind. Dies ist weder umweltfreundlich noch kostensparend. Die Veränderung des Steckdosensockels zur Anpassung an Steckdosentypen ist zumeist gar nicht möglich oder erfolgt durch das manuelle Verbiegen von Metallteilen bei der Installation. Dies ist jedoch nicht sicher, da der Steckdosensockel sich lockern kann, insbesondere wenn er nicht gerade verbaut ist und ein Stecker mit Kraft in die Steckdose eingeführt wird. Die Aufgabe der vorliegenden Erfindung ist es daher, einen verbesserten Steckdosensockel bereitzustellen, der sich für verschiedene Steckdosentypen eignet und zudem besonders einfach zu montieren ist. Auch ist es eine Aufgabe der vorliegenden Erfindung, einen Steckdosensockel bereitzustellen, der eine Lockerung des Steckdosensockels in der Steckdose unterbindet und die Sicherheit erhöht. Die Aufgabe wird gelöst durch einen Steckdosensockel umfassend einen Tragring mit einem Tragringrahmen und eine Sockelbasis mit einem Sockelboden, wobei der Tragring Raststifte umfasst, welche jeweils ein Raststiftende sowie mindestens einen ersten und/oder zweiten Rastwiderstand aufweisen, insbesondere einen ersten und zweiten Rastwiderstand, wobei die Sockelbasis Führungsaufnahmen für besagte Raststifte umfasst, wobei die Führungsaufnahmen jeweils mindestens eine erste und/oder mindestens eine zweite Rastaussparung für den ersten und/oder zweiten Rastwiderstand aufweisen, insbesondere mindestens erste und zweite Rastaussparungen für den ersten und zweiten Rastwiderstand, wobei der Abstand zwischen Tragringrahmen und Sockelboden mit besagten Raststiften, insbesondere reversibel, justierbar ist, wobei die Führungsaufnahmen jeweils eine erste Aufnahmeseite und eine gegenüberliegende zweite Aufnahmeseite aufweisen, wobei die mindestens eine erste Rastaussparung, insbesondere zwei erste Rastaussparungen, in der ersten Aufnahmeseite und die mindestens eine zweite Rastaussparung, insbesondere zwei zweite Rastaussparungen, in der zweiten Aufnahmeseite vorliegen, wobei der mindestens eine erste Rastwiderstand, insbesondere alle ersten Rastwiderstände, in Richtung der korrespondierenden ersten Aufnahmeseite und der mindestens eine zweite Rastwiderstand, insbesondere alle zweiten Rastwiderstände, in Richtung der korrespondierenden zweiten Aufnahmeseite geneigt ist und wobei der Steckdosensockel ausgelegt und eingerichtet ist, von einem ersten in einen zweiten Zustand verstellt zu werden, wobei der Tragringrahmen im ersten Zustand einen ersten Justierabstand (J1) vom Sockelboden und im zweiten Zustand einen zweiten Justierabstand vom Sockelboden aufweist, wobei der zweite Justierabstand größer oder kleiner als der erste Justierabstand ist.

Besagter Abstand zwischen Tragringrahmen und Sockelboden wird im nachfolgenden auch als Justierabstand bezeichnet. Er wird vorzugweise orthogonal zu einer durch den Tragringrahmen definierten Ebene bestimmt und erstreckt sich von besagter Ebene orthogonal bis zum Sockelboden, insbesondere bis zum weitest entfernten Bereich des Sockelbodens. Unter "justierbar" im Sinne der vorliegenden Erfindung wird verstanden, dass der Abstand zwischen Tragringrahmen und Sockelboden mit besagten Raststiften veränderbar ist, wobei zwei, drei, vier oder mehr Abstände mit den Raststiften eingestellt werden können, vorzugsweise erfindungsgemäß zwei bis acht Abstände, insbesondere bevorzugt drei bis sechs Abstände. Vorzugsweise können diese Abstände reversibel eingestellt werden, d.h. ein eingestellter Abstand kann auch wieder geändert werden.

Ferner wird nachfolgend auch der Begriff "Höhe" verwendet. Dies ist vorzugsweise die Entfernung vom Sockelboden, insbesondere bis zum weitest entfernten Bereich des Sockelbodens, welche orthogonal zu besagter Ebene bestimmt wird. Ein erstes Element welches höher als ein zweites Element angeordnet ist, befindet sich vorzugsweise näher am Tragringrahmen und/oder weiter weg vom Sockelboden.

Ein "Steckdosensockel" im Sinne der vorliegenden Erfindung dient als elektrischer Steckverbinder zwischen Leitungen und umfasst im Regelfall die Bauteile zur Fixierung der Steckdose und zur gattungsgemäßen Funktion, insbesondere zum Anschluss einer Leitung, vorzugsweise eines Steckers zwecks Stromübertragung. Vorzugsweise werden Spreizkrallen, wie sie beispielsweise in den eingangs genannten Druckschriften genannt sind, eingesetzt, um den Steckdosensockel in einer Wandaussparung zu fixieren. Es kann sich um einen Steckdosensockel für eine Telefonsteckdose, eine Datenübertragungsdose oder eine Antennensteckdose handeln. Besonders bevorzugt ist es jedoch ein Steckdosensockel für die Stromversorgung, beispielsweise für eine Schuko-Steckdose. Der Steckdosensockel ist vorzugsweise ausgelegt und eingerichtet, in einer Unterputzsteckdose verwendet zu werden und/oder mit einer Steckdosenblende, insbesondere aus Kunststoff, kombiniert zu werden.

Eine "Führungsaufnahme" im Sinne der vorliegenden Erfindung ist ausgelegt und eingerichtet, einen Raststift aufzunehmen und diesen während einer Veränderung des Abstands zwischen Tragringrahmen und Sockelboden zu führen. In einer Ausgestaltung können verschiedene Arten von Führungsaufnahmen vorliegen. Führungsaufnahme ist auch ein Oberbegriff für diese Arten, welche beispielsweise als "erste Führungsaufnahme" und "zweite Führungsaufnahme" bezeichnet werden können. Besagte Arten müssen sich nicht zwingend baulich unterscheiden, sondern können sich allein aus der unterschiedlichen Lage der Führungsaufnahmen an dem Steckdosensockel ergeben. Gleichwohl sind auch baulich abweichende Führungsaufnahmen erfindungsgemäß möglich. Dies wird an entsprechender Stelle näher erläutert.

Eine "Rastaussparung" im Sinne der vorliegenden Erfindung ist ausgelegt und eingerichtet, einen Rastwiderstand aufzunehmen. In einer Ausgestaltung können verschiedene Arten von Rastaussparungen vorliegen. Rastaussparung ist daher auch ein Oberbegriff für diese Arten, welche beispielsweise als "erste Rastaussparung" und "zweite Rastaussparung" bezeichnet werden können. Besagte Arten müssen sich nicht zwingend baulich unterscheiden, sondern können sich allein aus einer unterschiedlichen Lage an den Führungsaufnahmen ergeben. Gleichwohl sind auch baulich abweichende Rastaussparungen erfindungsgemäß möglich.

Vorzugsweise ist es vorgesehen, dass, insbesondere bei jedem Raststift jeweils, der erste Rastwiderstand am Raststiftende oder mit einem ersten Rastwiderstandsabstand beanstandet von besagtem Raststiftende vorliegt und der zweite Rastwiderstand mit einem zweiten Rastwiderstandsabstand beanstandet von demselben Raststiftende vorliegt, wobei der erste Rastwiderstandsabstand kleiner als der zweite Rastwiderstandsabstand ist. Vorzugsweise ist der erste Rastwiderstand näher am Raststiftende des jeweiligen Raststiftes als der zweite Rastwiderstand. Erste und zweite Rastwiderstände auf verschiedenen Höhen erleichtern das Einstellen verschiedener Abstände, insbesondere Justierabstände, zwischen Tragringrahmen und Sockelboden. Vorzugsweise sind der erste Rastwiderstand und der zweite Rastwiderstand mindestens so weit voneinander beanstandet, dass ein Zwischenabschnitt zwischen den Rastwiderständen vorliegt, der keine Rastwiderstände aufweist.

Auch ist es bevorzugt, wenn die Raststifte jeweils ein, insbesondere L-förmiges, Gleitelement aufweisen und die Führungsaufnahmen jeweils eine Gleitrille zur Aufnahme des Gleitelements umfassen, wobei das Gleitelement ausgelegt und eingerichtet ist, in der Gleitrille zu gleiten, insbesondere wobei die Rastwiderstände mit dem Gleitelement, insbesondere einstückig, verbunden sind und/oder wobei die Gleitrille eine Seitenvertiefung umfasst, vorzugsweise einen L-förmigen Querschnitt aufweist. Eine L-förmiger Querschnitt liegt vorzugsweise bereits dann vor, wenn sich ein erster und ein zweiter Schenkel definieren lassen, welche einen Winkel von 60 bis 120°, insbesondere 70 bis 110°, besonderes bevorzugt 80 bis 100°, einschließen. Gleitelemente erlauben ein geführtes Ändern der Abstände, insbesondere Justierabstände, zwischen Tragringrahmen und Sockelboden entlang der Gleitrillen. Vorzugsweise weist jeder der besagten Raststifte ein solches Gleitelement auf.

In einigen Ausgestaltungen ist es vorgesehen, dass die Gleitrille eine Seitenvertiefung und/oder eine Hinterschneidung umfasst. Beispielsweise kann die Gleitrille einen L-förmigen Querschnitt aufweisen, wobei das Gleitelement eine korrespondierende L-Form hat. Hierbei ist es bevorzugt, dass die Raststifte eine zur Seitenvertiefung und/oder Hinterschneidung korrespondierende Raststiftauskragung umfassen, welche ausgelegt und eingerichtet ist, in die Seitenvertiefung einzugreifen und/oder durch die Hinterschneidung blockiert zu werden, insbesondere hinter die einzugreifen. Bei dem L-förmigen Querschnitt entspricht die Raststiftauskragung vorzugsweise der kurzen Seiten des "L". Ein Seitenvertiefung im Sinne der vorliegenden Erfindung ist eine Vertiefung in einer Seitenwand der Rille, insbesondere wobei ein überstehender Bereich entsteht. Eine Hinterschneidung im Sinne der vorliegenden Erfindung ist ein Konstruktionselement, das an der Gleitrille hervorsteht und damit verhindern kann, dass sich das Gleitelement aus der Gleitrille orthogonal zur Gleitrichtung entfernen lässt. Die Seitenvertiefung und/oder Hinterschneidung bewirkt, dass sich das Gleitelement nicht orthogonal zur Gleitrichtung aus der Gleitrille entfernen lässt und verhindert, dass die Raststifte sich versehentlich lösen. Die Sicherheit bei der Montage wird mithin verbessert.

Vorzugsweise umfassen die Raststifte jeweils einen Verbindungsabschnitt, insbesondere in Form einer Verbindungsstange, zwischen dem jeweiligen Gleitelement und/oder Rastwiderstand und dem restlichen Tragring. Der Verbindungsabschnitt erleichtert bereits in seiner einfachsten Ausgestaltung, beispielsweise als Stab, das Verbinden von Gleitelement und/oder den Rastwiderständen mit dem restlichen Tragring. Darüber hinaus ist es bevorzugt, wenn der Verbindungsabschnitt, insbesondere in Form der Verbindungsstange, abgewinkelt und/oder gebogen ist. Vorzugsweise hat der Verbindungsabschnitt eine maximale Längserstreckung, die größer als eine maximale Längserstreckung des Gleitelements ist. Der Verbindungsabschnitt verbessert die Positionierung des Verbindungsabschnitts und ermöglicht ein leichteres Abfedern von Einrastbewegungen der Raststifte an der Biegung oder der Abwinkelung bzw. dem Knick. Hierdurch wird sanfter eingerastet, was die Montage und Justierung erleichtert.

Auch ist es bevorzugt, wenn der Tragring überwiegend oder vollständig aus Metall besteht und vorzugsweise einstückig aus besagtem Metall ausgebildet ist. Es hat sich gezeigt, dass sämtliche Bestandteile des Tragrings sich aus Metall bilden lassen, insbesondere auch die Raststifte. In einer Ausgestaltung ist der Tragring aus einem Metallblech durch austanzen erhältlich. Vorzugsweise ist das Metall Stahl, insbesondere verzinkter Stahl. Dies ist sowohl kostengünstig und auch besonders stabil. Es konnten überraschenderweise auch die Raststifte aus dem Metallblech durch ein Stanzverfahren ausgebildet werden. Vorzugsweise ist der gesamte Tragring einstückig aus einem Metallblech ausgebildet worden. Insbesondere ist es bevorzugt, wenn die Materialstärke des Metalls des Tragrings am Trageringrahmen und an den Raststiften, insbesondere am gesamten Tragering, weitgehen konstant ist, vorzugsweise wobei die Materialstärke orthogonal zur lokalen Ausrichtung des Metallblechs, welches zur Ausbildung des Tragerings verwendet wurde, bestimmt wird.

In einigen Ausgestaltungen ist es vorgesehen, dass der Tragring mindestens vier Raststifte, insbesondere genau vier Raststifte, umfasst und die Sockelbasis mindestens vier, vorzugsweise korrespondierende, Führungsaufnahmen, insbesondere genau vier Führungsaufnahmen, für die mindestens vier Raststifte umfasst. Die vier Raststifte sind vorzugsweise so angeordnet, dass sie die vier Ecken eines gedachten Rechtecks bilden. Mit mindestens vier Raststiften lässt sich der Tragring besonders gleichmäßig justieren, wobei alle Bereiche des Tragrings gleichzeitig, insbesondere gleichmäßig, dem Sockelboden angenähert oder von diesem entfernt werden. Auch wird die Stabilität der Lagerung des Tragrings am Steckdosensockel verbessert.

Ferner ist es bevorzugt, wenn der erste und/oder zweite Rastwiderstand, insbesondere eines jeden Raststifts, eine platten- oder quaderförmige Grundform aufweist. Dies lässt sich insbesondere auch mit der vorstehend beschrieben einstückigen Ausführung des Tragrings gut kombinieren. Platten- oder quaderförmige Grundformen erzeugen einen besonders geeigneten Rastwiderstand, der eine Justierung erleichtert und fest in den Aussparungen hält. Ist der Rastwiderstand zu gering oder zu hoch, ist eine Justierung der Abstände, insbesondere Justierabstände, zwischen Tragringrahmen und Sockelboden erschwert und zudem kann dies die Sicherheit beeinträchtigen, beispielsweise wenn sich ein Rastwiderstand ungewollt beim Einführen eines Steckers löst. Auch alternative Formen, beispielsweise Keilformen sind erfindungsgemäß denkbar.

Auch ist es in einer zweckmäßigen Ausgestaltung vorgesehen, dass die Sockelbasis Führungsaufnahmen in Form von mindestens zwei, insbesondere zwei, ersten Führungsaufnahmen an einer ersten Sockelseite der Sockelbasis, insbesondere Sockelbreitseite, und/oder in Form von mindestens zwei, insbesondere zwei, zweiten Führungsaufnahmen an einer gegenüberliegenden zweiten Sockelseite der Sockelbasis, insbesondere zweiten Sockelbreitseite, umfasst. Vorzugsweise umfasst die Sockelbasis vier Sockelseiten, insbesondere die besagte erste und zweite Sockelbreitseite und zwei Sockelschmalseiten. Es ist bevorzugt, wenn die Sockelbreitseiten eine größere Fläche oder maximale Längserstreckung aufweisen als die Sockelschmalseiten. Die Sockelbasis ist vorzugsweise nicht gleich lang und breit, sondern eher länglich, wobei die längeren Seiten die Sockelbreitseiten bereitstellen. Länge und Breite ist vorzugsweise parallel zur Ebene, welche der Tragringrahmen definiert, zu bestimmen. Durch das Anordnen von jeweils zwei Führungsaufnahmen auf gegenüberliegenden Sockelseiten, insbesondere Sockelbreitseiten, ist die Sockelbasis besonders fest und lagestabil am Tragring gleitbar fixiert. Alternativ wäre es beispielsweise denkbar, auf jeder der vier Sockelseiten jeweils genau eine Führungsaufnahme vorzusehen, was aber weniger fest und lagestabil ist.

Auch ist es in einer Ausgestaltung vorgesehen, dass die Sockelbasis zumindest teilweise, insbesondere überwiegend, aus Kunststoff besteht. Kunststoff hat isolierende Eigenschaften, was die Sicherheit verbessert und ist zudem kostengünstig. Ferner ist es bevorzugt, wenn der Kunststoff Glasfasern umfasst, insbesondere 2 bis 60 Gew.-%, insbesondere bevorzugt 10 bis 50 Gew.-%, ganz besonders bevorzugt 20 bis 40 Gew.-%. Dies ist insbesondere für wiederholt justierbare und stabile Führungsaufnahmen vorteilhaft.

Vorzugsweise umfassen die Führungsaufnahmen jeweils eine, insbesondere außenseitige, erste Aufnahmeseite, insbesondere insgesamt vier erste Aufnahmeseiten von vier Führungsaufnahmen, vorzugsweise wobei jede erste Aufnahmeseite mindestens eine erste Auskragung und/oder mindestens eine erste Anlagefläche aufweist, insbesondere drei erste Auskragungen und drei erste Anlageflächen. Vorzugsweise grenzt an jede erste Auskragung eine erste Anlagefläche, insbesondere wobei die erste Auskragung und die erste Anlagefläche jeweils einen Winkel von 60 bis 120°, insbesondere 70 bis 110°, besonderes bevorzugt 8o bis 100°, einschließen.

In einigen Ausgestaltungen umfassen die ersten Führungsaufnahmen eine andere zweite Aufnahmeseite als die zweiten Führungsaufnahmen. Insbesondere ist es bevorzugt, wenn die ersten Führungsaufnahmen jeweils eine zweite Aufnahmeseite mit jeweils mindestens einer zweiten Anlagefläche aufweisen, die jeweils größer als eine erste Anlagefläche ist und/oder wenn die zweiten Führungsaufnahmen jeweils eine zweite Aufnahmeseite mit jeweils mindestens einer zweiten Auskragung und mindestens einer dritten Anlagefläche aufweisen, insbesondere wobei die dritte Anlagefläche jeweils kleiner als die zweite Anlagefläche ist. Hierdurch lässt sich der Tragering leichter mit der Sockelbasis verbinden.

Die ersten Aufnahmeseiten liegen vorzugsweise außenseitig vor und die zweiten Aufnahmeseiten liegen vorzugsweise innenseitig vor, insbesondere so dass die zweiten Aufnahmeseiten näher am Zentrum der Tragringöffnung sind als die ersten Aufnahmeseiten. Erste Aufnahmeseiten können im Sinne der vorliegenden Erfindung vorzugsweise auch als außenseitige Aufnahmeseiten und zweite Aufnahmeseiten vorzugsweise auch als innenseitige Aufnahmeseiten bezeichnet werden.

In einer besonders geeigneten Ausgestaltung sind sämtliche der vorstehend beschriebenen Aufnahmeseiten innerhalb einer Ausgestaltung vorgesehen, d.h. vier außenseitige erste Aufnahmeseite mit vier ersten Auskragungen und vier ersten Anlageflächen sowie vier gegenüberliegende innenseitige zweite Aufnahmeseite, wobei zwei zweite Aufnahmeseiten der vier zweiten Aufnahmeseiten die beschriebene zweite Anlagefläche und die anderen beiden der vier zweiten Aufnahmeseiten jeweils die mindestens eine zweite Auskragung und jeweils mindestens eine dritte Anlagefläche aufweisen. Es liegen mithin zwei Arten von zweiten Aufnahmeseiten in dieser Ausgestaltung vor.

Die vorstehend beschriebenen ersten und zweiten Auskragungen schirmen die, insbesondere kantigen, Rastwiderstände der Raststifte ab und schützen den Nutzer, wenn der Abstand, insbesondere Justierabstand, zwischen Tragringrahmen und Sockelboden mit besagten Raststiften justiert wird. Auch wird verhindert, dass ein Justieren des Justierabstands durch Reibung seitens des Nutzers oder von Mauerwerk blockiert wird.

Des Weiteren ist es bevorzugt, wenn jede erste und/oder zweite Auskragung an eine korrespondierende erste bzw. zweite Anlagefläche grenzt, insbesondere unter einem Winkel von 60 bis 120°, insbesondere 70 bis 110°, besonderes bevorzugt 80 bis 100°.

Ferner ist es bevorzugt, wenn mindestens eine erste Rastaussparung, insbesondere zwei erste Rastaussparungen, zwischen den ersten Auskragungen und/oder mindestens eine zweite Rastaussparung, insbesondere zwei zweite Rastaussparungen, zwischen den zweiten Auskragungen ausgebildet ist, und/oder wenn mindestens eine erste Auskragung zwischen ersten Rastaussparungen und/oder die mindestens eine zweite Auskragung zwischen zweiten Rastaussparungen ausgebildet ist, insbesondere wobei jede Führungsaufnahmen jeweils drei erste und drei zweite Auskragung umfasst. Raustaussparungen und Auskragungen sind dementsprechend vorzugsweise miteinander verzahnt, wobei dies ein eine feinere Justierung ermöglicht und zugleich die Rastwiderstände besser abschirmt.

Ferner ist es bevorzugt, wenn mindestens eine erste Rastaussparung, insbesondere zwei erste Rastaussparungen, zwischen den ersten Anlageflächen und/oder mindestens eine zweite Rastaussparung, insbesondere zwei zweite Rastaussparungen, zwischen den zweiten und/oder dritten Anlageflächen ausgebildet ist, und/oder wenn mindestens eine erste Anlagefläche zwischen ersten Rastaussparungen und/oder die mindestens eine zweite und/oder dritte Anlagefläche zwischen zweiten Rastaussparungen ausgebildet ist, insbesondere wobei jede Führungsaufnahme jeweils sechs Anlageflächen umfasst. Rastaussparungen und Anlageflächen sind dementsprechend vorzugsweise miteinander verzahnt, wobei dies eine feinere Justierung ermöglicht und den Widerstand des Übergangs zwischen verschiedenen Zuständen vermindert.

Erfindungsgemäß ist vorgesehen, dass die Führungsaufnahmen jeweils eine erste Aufnahmeseite und eine gegenüberliegende zweite Aufnahmeseite aufweisen, insbesondere die vorstehend beschriebenen ersten und zweiten Aufnahmeseiten, wobei die mindestens eine erste Rastaussparung, insbesondere zwei erste Rastaussparungen, in der ersten Aufnahmeseite und die mindestens eine zweite Rastaussparung, insbesondere zwei zweite Rastaussparungen, in der zweiten Aufnahmeseite vorliegt. Es ist grundsätzlich auch erfindungsgemäß denkbar, dass die erste und zweite Rastaussparung einer Führungsaufnahme auf derselben Aufnahmeseite vorliegt. Es hat sich jedoch gezeigt, dass die Rastwiderstände bei gegenüberliegenden Rastaussparungen besser einrasten. Wird ein Rastwiderstand aus einer ersten Rastaussparung entfernt, kann dies die Bewegung eines anderen Rastwiderstands in die zweite Rastaussparung unterstützen. Die Justierung wird erleichtert und kann genauer erfolgen, wobei weniger Kraft nötig ist. Auch ist es nunmehr möglich, die Abstände zwischen erster und zweiter Rastaussparung unabhängig zu setzten, insbesondere so dass sich die Rastaussparungen überschneiden würden, wenn sie auf derselben Aufnahmeseite vorliegen würden bzw. sich nun zumindest bereichsweise gegenüberliegen. Mithin ermöglicht dies eine feinere Abstufung der durch die erste und zweite Rastaussparung vorgegebenen Höhe. In einer Ausgestaltung ist es ganz besonders bevorzugt, wenn mindestens eine erste Rastaussparung mindestens einer zweiten Rastaussparung zumindest teilweise gegenüberliegt, wobei die Abstände der ersten und zweiten Rastaussparung zum Raststiftende unterschiedlich sind.

In einigen Ausgestaltungen ist es vorgesehen, dass die erste Aufnahmeseite einer jeden Führungsaufnahme jeweils mindestens zwei erste Rastaussparungen, insbesondere 2, 3 oder 4 erste Rastaussparungen, aufweist und die zweite Aufnahmeseite jeweils mindestens zwei zweite Rastaussparungen, insbesondere 2, 3 oder 4 zweite Rastaussparungen, und/oder dass die erste Aufnahmeseite einer jeden Führungsaufnahme jeweils mindestens drei erste Auskragungen und/oder erste Anlageflächen aufweist und die zweite Aufnahmeseite jeweils mindestens drei zweite Auskragungen und/oder zweite und/oder dritten Anlageflächen. Dies erlaubt ein noch feineres justieren des Abstands, insbesondere des Justierabstands, zwischen Tragringrahmen und Sockelboden, insbesondere wobei mindestens vier Abstände einstellbar sind.

Erfindungsgemäß ist vorgesehen, dass mindestens ein erster Rastwiderstand, insbesondere alle ersten Rastwiderstände, in Richtung der korrespondierenden ersten Aufnahmeseite und mindestens ein zweiter Rastwiderstand, insbesondere alle zweiten Rastwiderstände, in Richtung der korrespondierenden zweiten Aufnahmeseite geneigt ist. Die korrespondierende Aufnahmeseite ist jene, welche zu der Führungsaufnahme gehört, in welche der Raststift eingefügt ist. Durch die Neigung der Rastwiderstände ist ein Wechsel zwischen gegenüberliegenden Rastaussparungen erleichtert. Auch ist ein Einführen und ein Herausheben der Rastwiderstände aus Rastaussparungen einfacher möglich.

Vorzugsweise weist der erste Rastwiderstand eine erste Ausrichtung und der zweite Rastwiderstand eine zweite Ausrichtung auf und/oder weist der erste Rastwiderstand eine erste Rastwiderstandsoberfläche mit der ersten Ausrichtung und der zweite Rastwiderstand eine zweite Rastwiderstandsoberfläche mit der zweiten Ausrichtung auf, vorzugsweise wobei die Ausrichtungen der Orientierungen von plattenförmigen Rastwiderständen entsprechen, wobei die erste Ausrichtungen eine erste Ebene definiert und die zweite Ausrichtung eine zweite Ebene, wobei besagte erste und zweite Ebene unter einem Winkel von 60 bis 120°, insbesondere 70 bis 110°, besonderes bevorzugt 80 bis 100°, aufeinandertreffen.

Vorzugsweise ist es vorgesehen, dass die erste Auskragung in Richtung der gegenüberliegenden zweiten Aufnahmeseite und die zweite Auskragung in Richtung der gegenüberliegenden ersten Aufnahmeseite geneigt ist. Auch kann es vorgesehen sein, dass die erste Auskragung und/oder eine erste Auskragungsoberfläche der ersten Auskragung im Wesentlichen gleichgerichtet mit einer zweiten Anlagefläche desselben Führungselements ist. Ferner kann es vorgesehen sein, dass die zweite Auskragung und/oder eine zweite Auskragungsoberfläche der zweiten Auskragung im Wesentlichen gleichgerichtet mit einer ersten Anlagefläche desselben Führungselements ist. Vorzugsweise ist dies bei allen Führungselementen der Fall. "Im Wesentlichen gleichgerichtet" bedeutet, dass die entsprechenden Ausrichtungen nicht mehr als 20°, insbesondere 10°, vorzugsweise 5°, voneinander abweichen. Hierdurch wird ein Schirm aus Auskragungen gebildet, der sich zumindest teilweise über die Rastwiderstände erstrecken kann und diese abschirmt. Dies verhindert, dass die Rastwiderstände durch Berührung seitens des Nutzers versehentlich an einer Änderung der Rastposition gehindert werden und der Nutzer wird vor Kanten der Rastwiderstände geschützt.

Auch ist es besonders bevorzugt, wenn die Neigung der ersten Anlagefläche im Wesentlichen der Neigung des ersten Rastwiderstands entspricht und/oder die Neigung der zweiten und dritten Anlagefläche im Wesentlichen der Neigung des zweiten Rastwiderstands entspricht, insbesondere wenn der jeweilige Raststift in seiner korrespondierenden Führungsaufnahme, vorzugsweise der korrespondierenden Gleitrille, ruht. Hierdurch können die Raststifte über die Anlagefläche gleiten und auf dieser anliegen, was den Einrastvorgang verbessert und auch ein Verbiegen der Rastwiderstände verhindert. Auch ein Wechsel der Rastwiderstände in eine andere Rastaussparung wird erleichtert.

Besonders bevorzugt ist es auch, wenn die ersten und zweiten Rastaussparungen jeweils zueinander in der Höhe versetzt zumindest bereichsweise gegenüberliegend angeordnet sind, insbesondere korrespondierende Paare von ersten und zweiten Rastaussparungen aufweisen, in welchen die ersten und zweiten Rastaussparungen zueinander in der Höhe versetzt zumindest bereichsweise gegenüberliegend angeordnet sind. Hierbei kann jede der Führungsaufnahmen mindestens zwei solcher Paare, insbesondere genau zwei solcher Paare aufweisen.

In einigen ganz besonders bevorzugten Ausgestaltungen ist es vorgesehen, dass die mindestens eine ersten Rastaussparung der mindestens einen zweiten Rastaussparung innerhalb mindestens einer Führungsaufnahme, insbesondere aller Führungsaufnahme, jeweils zumindest teilweise und/oder bereichsweise gegenüberliegt, wobei der Rastaussparungsabstand mindestens einer ersten Rastaussparung vom Sockelboden kleiner als der Rastaussparungsabstand der jeweils gegenüberliegenden zweiten Rastaussparung vom Sockelboden ist, insbesondere wobei mindestens zwei erste Rastaussparungen mindestens zwei zweiten Rastaussparungen zumindest teilweise und/oder bereichsweise gegenüberliegen, wobei der Rastaussparungsabstand jeder ersten Rastaussparung vom Sockelboden jeweils kleiner als der Rastaussparungsabstand der jeweils gegenüberliegenden zweiten Rastaussparung vom Sockelboden ist. Obgleich die Aussparungen sich also zumindest teilweise und/oder bereichsweise gegenüberliegen, gibt es geringe Höhenunterschiede. Dies ermöglicht es, die Abstände vom Raststiftende sehr viel genauer zu justieren. Möglich ist dies, wenn die Rastaussparungen zumindest teilweise und/oder bereichsweise gegenüberliegend angeordnet sind. Auch ist es bevorzugt, wenn alle ersten Rastaussparungen geringfügig näher am Sockelboden sind als die zumindest teilweise und/oder bereichsweise gegenüberliegenden zweiten Rastaussparungen. Es wird von einem "zumindest teilweise und/oder bereichsweise gegenüberliegen" gesprochen, da es die besagten geringen Höhenunterschiede geben kann, wobei die Aussparungen dennoch im Wesentlichen gegenüberliegen. Gleichwohl liegen sich die Rastaussparungen gegenüber nur eben nicht exakt auf gleicher Höhe. Hierdurch lassen sich die Justierabstände genauer justieren und ggf. auch mehr Abstände einstellen. Wenn Rastaussparungen sich bereichsweise gegenüberliegen, bedeutet dies vorzugsweise, dass ein Bereich einer Rastaussparung einem Bereich der bereichsweise gegenüberliegenden Rastaussparung gegenüberliegt, insbesondere ein erster Bereich einer ersten Rastaussparung einem zweiten Bereich der bereichsweise gegenüberliegenden zweiten Rastaussparung gegenüberliegt. Hierbei ist es auch möglich, dass die Rastaussparungen zusätzlich weitere (dritte) Bereiche aufweisen, welche keine korrespondierenden gegenüberliegenden Pendants haben.

In einer zweckmäßigen Ausgestaltung hat der Tragring außenseitig eine rechteckige Grundform, insbesondere wobei sich vier Tragringränder definieren lassen, die das Rechteck bestimmen. Der Tragring hat ferner vorzugsweise eine, insbesondere zentrale, Tragringöffnung, insbesondere bevorzugt für eine Steckdosenblende. Vorzugsweise ist diese Tragringöffnung durch eine Ringverstärkung stabilisiert. Die Ringverstärkung umläuft besagte Tragringöffnung vorzugsweise ganz oder zumindest überwiegend. In einer zweckmäßigen Ausgestaltung ist die Ringverstärkung durch eine Absenkung und/oder Neigung des Tragringmaterials in Richtung des Sockelbodens und/oder in Richtung der Raststiftenden ausgebildet. Besonders bevorzugt ist es, wenn die Raststifte an der Ringverstärkung befestigt sind, und insbesondere die besagte Absenkung und/oder Neigung der Ringverstärkung gradlinig in einen Abschnitt der Raststifte, insbesondere den Verbindungsabschnitt übergeht. Dies stabilisiert sowohl die Tragringöffnung und erlaubt gleichzeitig eine stabilere Anbindung der Raststifte an den Tragringrahmen. Vorzugsweise umfasst der Tragring auch Tragringaussparungen für die Installation und/oder Montage einer Gerätedose. Erfindungsgemäß ist der Steckdosensockel ausgelegt und eingerichtet, von einem ersten in einen zweiten Zustand verstellt zu werden, wobei der Tragringrahmen im ersten Zustand einen ersten Justierabstand vom Sockelboden und im zweiten Zustand einen zweiten Justierabstand vom Sockelboden aufweist, wobei der zweite Justierabstand größer oder kleiner als der erste Justierabstand ist, insbesondere wobei der ersten Rastwiderstand im ersten Zustand in einer ersten Rastaussparung gelagert ist und im zweiten Zustand aus der ersten Rastaussparung herausgelöst ist, insbesondere in keiner ersten Rastaussparung oder zweiten Rastaussparung des Steckdosensockels vorliegt, wobei der zweite Rastwiderstand im zweiten Zustand in einer zweite Rastaussparung gelagert ist.

Auch ist es bevorzugt, wenn der Steckdosensockel ausgelegt und eingerichtet ist, von einem ersten Zustand wahlweise in einen zweiten Zustand oder einen dritten Zustand, insbesondere auch wahlweise in einen vierten Zustand, verstellt zu werden, wobei das Raststiftende im ersten Zustand einen ersten Justierabstand vom Sockelboden aufweist, im zweiten Zustand einen zweiten Justierabstand vom Sockelboden aufweist, im dritten Zustand einen dritten Justierabstand vom Sockelboden aufweist und im vierten Zustand einen vierten Justierabstand vom Sockelboden aufweist, wobei der erste Justierabstand größer als der zweite Justierabstand, der zweite Justierabstand größer als der dritte Justierabstand und der dritte Justierabstand größer als der vierte Justierabstand ist. Vorzugsweise ist es vorgesehen, dass die Justierung reversibel erfolgen kann, d.h. zwischen Zustanden kann reversibel gewechselt werden.

In einer Ausgestaltung des Steckdosensockels ist es vorgesehen, dass der Tragring lösbar mit der Steckdosenbasis verbunden ist.

In einer weiteren Ausführungsform des erfindungsgemäßen Steckdosensockels ist die Steckdosenbasis für die rastende Steckverbindung mit dem vorstehend beschriebenen Tragring ausgelegt und eingerichtet. Die möglichen Ausgestaltungen der Steckdosenbasis ergeben sich aus den vorstehenden Ausführungen zu dieser.

Ferner betrifft die Erfindung eine Steckdose umfassend den vorstehend beschriebenen Steckdosensockel und eine Steckdosenblende.

Der beschriebene Steckdosensockel, der Tragring, die Steckdosenbasis oder die Steckdose können zur Anpassung des Steckdosensockels, des Tragrings, der Steckdosenbasis bzw. der Steckdose an Steckdosenblenden verschiedener Bauart, insbesondere mit verschiedener Einbautiefe, insbesondere bevorzugt bei der Installation einer Steckdose in einer Gebäudewand, verwendet werden.

Mit der vorliegenden Erfindung wird ein Steckdosensockel bereitgestellt, der höhenverstellbar ist. Es hat sich gezeigt, dass dies mit Raststiften der vorstehend beschriebenen Bauart in besonders einfacher und sicherer Art und Wiese umgesetzt wird. Insbesondere ist auch eine reversible Einstellung vorzugsweise möglich. Durch die Konstruktion der Raststifte und der Führungsaufnahmen lassen sich zahlreiche nahe beieinanderliegende Höhen fest einstellen und somit fein justieren. Überraschenderweise gelingt eine Feinjustierung besonders gut, wenn Rastaussparungen verwendet werden, die zueinander in der Höhe versetzt zumindest bereichsweise gegenüberliegende angeordnet sind. Dies ermöglicht eine anforderungsspezifische Anpassung des Abstands zwischen Trageringrahmen und Steckdosenboden während oder vor einer Montage. Mithin eignet sich der Steckdosensockel für Steckdosenblenden verschiedener Bauart, was bisher oftmals nicht möglich war.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken.

Dabei zeigt:
- Figur 1: eine perspektivische Ansicht eines erfindungsgemäßen Steckdosensockels;
- Figur 2: eine perspektivische Ansicht eines Tragrings;
- Figur 3: schematische Seitenansichten des Tragrings;
- Figur 4: eine Obenaufansicht der Sockelbasis;
- Figur 5: eine perspektivische Ansicht der Sockelbasis;
- Figur 6: eine perspektivische Ansicht des erfindungsgemäßen Steckdosensockels;
- Figur 7: schematische Seitenansicht des erfindungsgemäßen Steckdosensockels;
- Figur 8: eine Obenaufansicht des erfindungsgemäßen Steckdosensockels; und
- Figur 9: schematische Seitenansichten des erfindungsgemäßen Steckdosensockels mit verschiedenen Justierabständen.

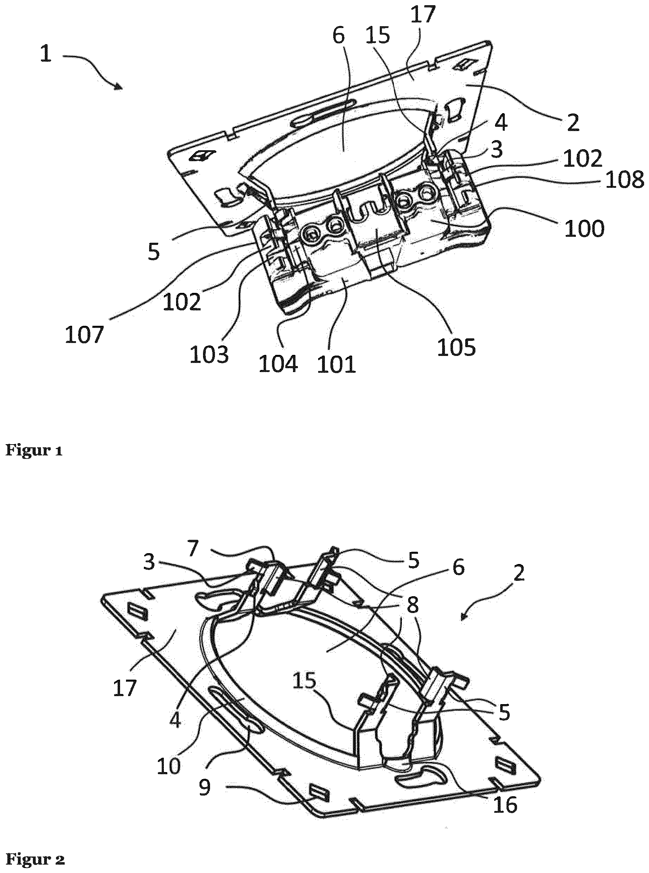

Figur 1 zeigt einen Steckdosensockel 1 umfassend einen Tragring 2 mit einem Tragringrahmen 17 und eine Sockelbasis 100 mit einem Sockelboden 101, wobei der Tragring 2 Raststifte 5 umfasst, welche jeweils einen ersten und zweiten Rastwiderstand 3, 4 und einen Verbindungsabschnitt 15 aufweisen, wobei die Sockelbasis 100 Führungsaufnahmen 102 für besagte Raststifte 5 umfasst, wobei die Führungsaufnahmen 102 jeweils mindestens eine erste und/oder mindestens eine zweite Rastaussparung 103, 104 aufweisen, wobei der Abstand zwischen Tragringrahmen 17 und Sockelboden 101 mit besagten Raststiften 5 justierbar ist. Frontal ist die erste Sockelbreitseite 105 zu sehen, an welche sich die erste Sockelschmalseite 107 und gegenüberliegend die zweite Sockelschmalseite 108 anschließt. Der Tragring hat eine Tragringöffnung 6 für eine Steckdosenblende. Aus Gründen der Übersicht, sind einige Bauteile, welche in Steckdosensockeln üblicherweise verbaut sind, beispielsweise Spreizkrallen, nicht explizit wiedergegeben. Dem Fachmann sind diese Bauteile aus dem Stand der Technik hinreichend geläufig.

Figur 2 zeigt den Tragring 2, welcher gewendet wurde, um die Raststifte 5 deutlicher zu zeigen. Der Tragring 2 mit dem Tragringrahmen 17 umfasst Tragringaussparungen 9 für die Installation und Montage einer Gerätedose. Er umfasst eine Ringverstärkung 10, welche sich an Tragringöffnung 6 anschließt und diese umgibt. Jeweils zwei Raststiften 5 sind durch eine Zwischenverstärkung 16 verbunden. Die vier Raststifte 5 umfassen jeweils ein Raststiftende 7, einen Verbindungsabschnitt 15, einen ersten Rastwiderstand 3 und einen zweiten Rastwiderstand 4, wobei der erste Rastwiderstand 3 jeweils am Raststiftende 7 vorliegt und der zweite Rastwiderstand 4 mit einem zweiten Rastwiderstandsabstand jeweils beanstandet vom Raststiftende 7 vorliegt, wobei der erste Rastwiderstandsabstand kleiner als der zweite Rastwiderstandsabstand ist. Die Raststifte 5 weisen jeweils ein L-förmiges Gleitelement 8 auf, wobei die Rastwiderstände 3, 4 mit dem Gleitelement 8 einstückig verbunden sind. Zu sehen ist auch, dass die Absenkung und/oder Neigung der Ringverstärkung 10 gradlinig in den Verbindungsabschnitt 15 übergeht.

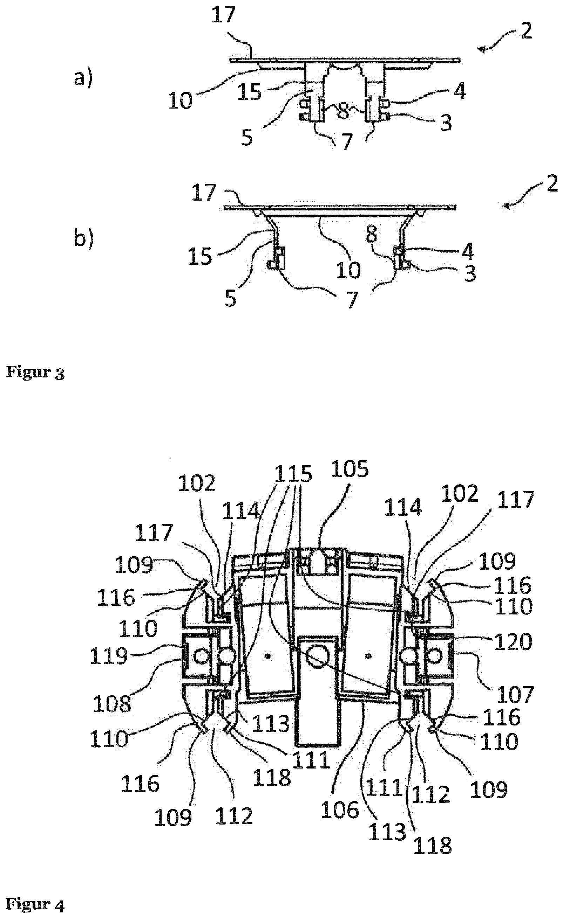

Figur 3 zeigt einem Tragring 2 mit einem Tragringrahmen 17, wobei der Tragring 2 Raststifte 5 umfasst, welche jeweils ein Raststiftende 7 sowie einen ersten und zweiten Rastwiderstand 3, 4 aufweisen. Die Raststifte 5 weisen jeweils ein L-förmiges Gleitelement 8 auf, wobei die Rastwiderstände 3, 4 mit dem Gleitelement 8 einstückig verbunden sind. Zu sehen ist auch die Ringverstärkung 10, welche sich in Richtung der Raststiftenden 7 erstreckt und von welcher die Verbindungsabschnitt 15 der Raststifte 5 abgehen. Figur 3 a) zeigt eine gegenüber Figur 3 b) um 90° gedrehte Ansicht.

Figur 4 zeigt die Sockelbasis mit einer ersten Sockelbreitseite 105, einer gegenüberliegenden zweiten Sockelbreitseite 106, einer ersten Sockelschmalseite 107 und einer zweiten Sockelschmalseite 108, welche sich zwischen den Sockelbreitseiten erstrecken. Die besagten beiden Sockelbreitseiten weisen jeweils zwei Führungsaufnahmen 102, 112 für Raststifte auf. Jede der vier Führungsaufnahmen 102, 112 weist eine außenseitige erste Aufnahmeseite 116 mit ersten Auskragungen 109 und ersten Anlageflächen 110 auf. Gegenüberliegend befinden sich zweite Aufnahmeseiten 117, 118. Die beiden zweiten Aufnahmeseiten 117 der ersten Sockelbreitseite 105 weisen keine Auskragungen wie die anderen Aufnahmeseiten auf. Stattdessen sind hier größere zweite Anlageflächen 114 vorgesehen. Die beiden zweiten Aufnahmeseiten 118 der zweiten Sockelbreitseite 106 weisen Auskragungen 111 und dritte Anlageflächen 113 auf. Auch ist zu sehen, dass jede der Führungsaufnahmen 102, 112 jeweils eine Gleitrille 115 zur Aufnahme des Gleitelements 8 umfasst, wobei die Gleitrillen 115 jeweils eine Seitenvertiefung 120 umfassen und einen L-förmigen Querschnitt aufweisen. Außerdem umfasst die Sockelbasis einen Anschlussblock 119 für Spreizkrallen, welche in durch den Anschlussblock definierte Aussparungen eingefügt werden können. Die ersten Auskragungen 109 und die ersten Anlageflächen 110 grenzen jeweils unter einem Winkel von 90° aneinander bzw. schließen besagten Winkel ein.

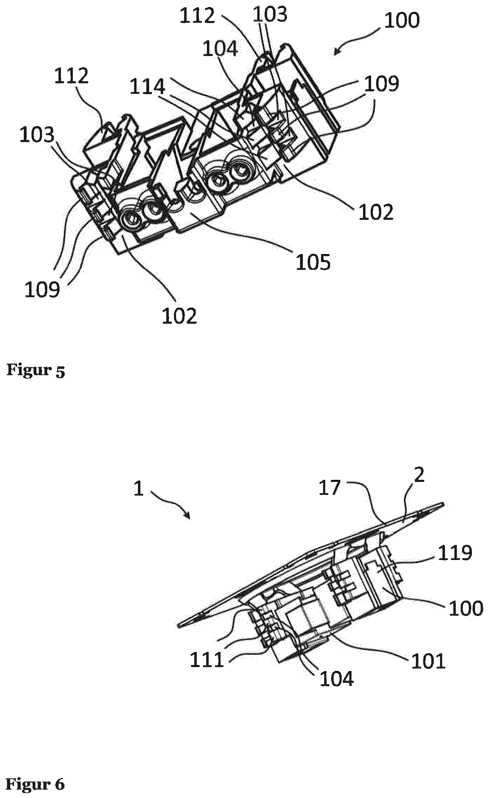

Figur 5 zeigt eine perspektivische Ansicht der Sockelbasis 100 aus Richtung der ersten Sockelbreitseite 105. Hierbei sind zwei erste Führungsaufnahmen 102 zu sehen, welche jeweils zwei, erste Rastaussparung 103 zwischen ersten Auskragungen 109, wobei jeweils eine erste Auskragung 109 zwischen ersten Rastaussparungen 103. Gegenüberliegend von den ersten Führungsaufnahmen 102 sind die zweiten Führungsaufnahmen 112 zu erkennen. Die ersten Führungsaufnahmen 102 umfassen jeweils eine zweite Aufnahmeseite, die jeweils drei zweite Anlagefläche 114 aufweisen, wobei sich zwischen den zweiten Anlageflächen 114 zweite Rastaussparungen 104 der ersten Führungsaufnahmen 102 erstrecken.

Figur 6 zeigt eine perspektivische Ansicht des Steckdosensockels 1 umfassend einen Tragring 2 mit einem Tragringrahmen 17 und eine Sockelbasis 100 mit einem Sockelboden 101 und dem Anschlussblock 119 für Spreizkrallen. Zu sehen sind zwei zweite Rastaussparung 104, welche zwischen zweiten Auskragungen 111 ausgebildet ist, wobei eine zweite Auskragung 111 zwischen zweiten Rastaussparungen 104 ausgebildet ist.

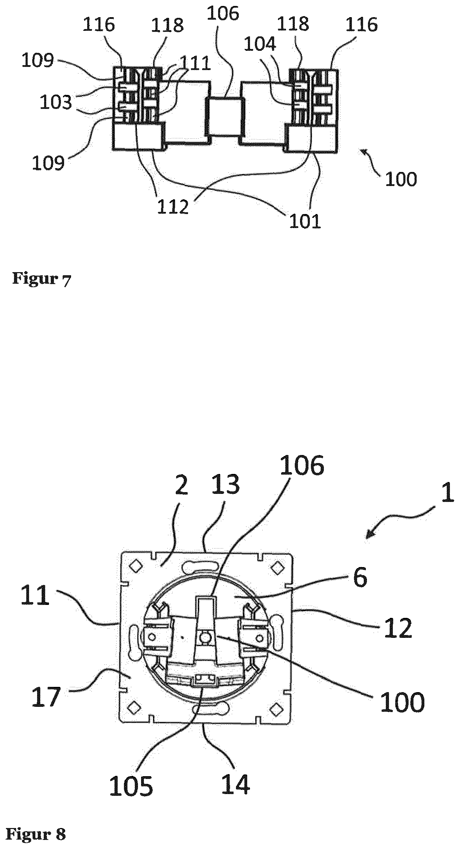

Figur 7 zeigt eine Seitenansicht der Sockelbasis 100 mit einem Sockelboden 101 aus Richtung der zweiten Sockelbreitseite 106. Die zweiten Führungsaufnahmen 112 umfassen jeweils außenseitige erste Aufnahmeseiten 116 und innenseitige zweite Aufnahmeseiten 118. Zwei erste Rastaussparungen 103 sind zwischen drei ersten Auskragungen 109 jeweils in den beiden ersten Aufnahmeseiten 116 ausgebildet. Zwei zweite Rastaussparungen 104 sind zwischen drei ersten Auskragungen 111 jeweils in den beiden zweiten Aufnahmeseiten 118 ausgebildet. Hierbei liegen die ersten Rastaussparung 103 den zweiten Rastaussparung 104 innerhalb der Führungsaufnahmen jeweils gegenüber, wobei der Rastaussparungsabstand der ersten Rastaussparung 103 vom Sockelboden 101 kleiner als der Rastaussparungsabstand der jeweils gegenüberliegenden zweiten Rastaussparung 104 vom Sockelboden 101 ist. Dieses Merkmal hat sich für eine Feinjustierung als besonders förderlich erwiesen.

Figur 8 zeigt einen Steckdosensockel 1 umfassend einen Tragring 2 mit einem Tragringrahmen 17 und eine Sockelbasis 100, wobei die Sockelbasis 100 eine erste Sockelbreitseite 105 und eine gegenüberliegende zweite Sockelbreitseite 106 umfasst, die durch die Tragringöffnung 6 sichtbar sind. Der Tragring 2 ist im Wesentlichen rechteckig und umfasst einen ersten Tragringrand 11, einen gegenüberliegenden zweiten Tragringrand 12, einen dritten Tragringrand 13 und einen gegenüberliegenden vierten Tragringrand 14, welche besagte rechteckige Form definieren.

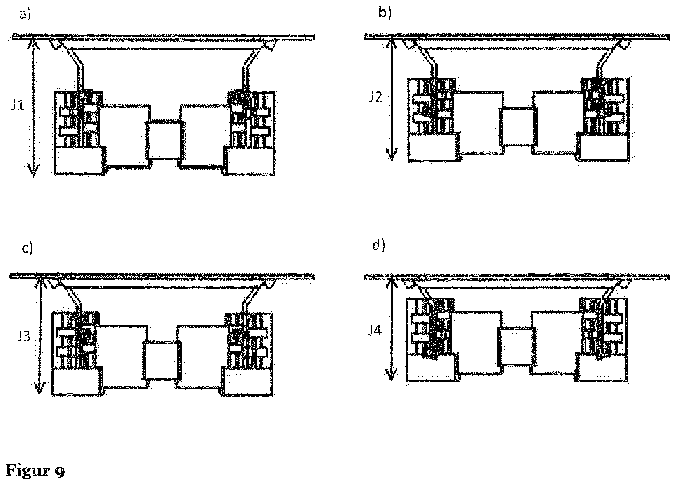

Figur 9 zeigt Steckdosensockel 1 mit verschiedenen Abständen zwischen Tragringrahmen 17 und Sockelboden 101, wobei die Abstände durch eine Verschiebung der Raststifte eingestellt wurde. Hierbei ist der Steckdosensockel ausgelegt und eingerichtet, von einem ersten Zustand wahlweise in einen zweiten Zustand oder einen dritten Zustand, insbesondere auch wahlweise in einen vierten Zustand, verstellt zu werden, wobei das Raststiftende im ersten Zustand einen ersten Justierabstand J1 vom Sockelboden aufweist, im zweiten Zustand einen zweiten Justierabstand J2 vom Sockelboden aufweist, im dritten Zustand einen dritten Justierabstand J3 vom Sockelboden aufweist und im vierten Zustand einen vierten Justierabstand J4 vom Sockelboden aufweist, wobei der erste Justierabstand J1 größer als der zweite Justierabstand J2, der zweite Justierabstand J2 größer als der dritte Justierabstand J3 und der dritte Justierabstand J3 größer als der vierte Justierabstand J4 ist. Der erste Justierabstand J1 ist in Figur 9 a) gezeigt, der zweite Justierabstand J2 ist in Figur 9 b) gezeigt, der dritte Justierabstand J3 in Figur 9 c) und der vierte Justierabstand J4 in Figur 9 d). Die Justierabstände wurden orthogonal zu der durch den Tragringrahmen definierten Ebene bestimmt. Auch hier ist zu erkennen, dass die Aussparungen jeweils bereichsweise gegenüberliegen und zudem geringfügig in der Höhe zueinander versetzt angeordnet sind. Dies erleichtert die Feinjustierung der Abstände J1, J2, J3 und J4 mit einer optimalen Anordnung der Aussparungen.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste:

- 1: Steckdosensockel
- 2: Tragring
- 3: erste Rastwiderstände
- 4: zweite Rastwiderstände
- 5: Raststifte
- 6: Tragringöffnung
- 7: Raststiftende
- 8: Gleitelement
- 9: Tragringaussparungen für Gerätedosenmontage
- 10: Ringverstärkung
- 11: erster Tragringrand
- 12: zweiter Tragringrand
- 13: dritter Tragringrand
- 14: vierter Tragringrand
- 15: Verbindungsabschnitt
- 16: Verstärkungsabschnitt
- 17: Tragringrahmen
- 100: Sockelbasis
- 101: Sockelboden
- 102: Führungsaufnahmen, insbesondere erste Führungsaufnahmen
- 103: erste Rastaussparungen
- 104: zweite Rastaussparungen
- 105: erste Sockelbreitseite
- 106: zweite Sockelbreitseite
- 107: erste Sockelschmalseite
- 108: zweite Sockelschmalseite
- 109: erste Auskragungen
- 110: erste Anlageflächen
- 111: zweite Auskragungen
- 112: Führungsaufnahmen, zweite Führungsaufnahmen
- 113: dritte Anlageflächen
- 114: zweite Anlageflächen
- 115: Gleitrille
- 116: erste Aufnahmeseiten
- 117: zweite Aufnahmeseiten der ersten Führungsaufnahmen
- 118: zweite Aufnahmeseiten der zweiten Führungsaufnahmen
- 119: Anschlussblock für Krallen
- 120: Seitenvertiefung

## Patentansprüche

1. Steckdosensockel (1) umfassend einen Tragring (2) mit einem Tragringrahmen (17) und eine Sockelbasis (100) mit einem Sockelboden (101),
wobei der Tragring (2) Raststifte (5) umfasst, welche jeweils ein Raststiftende (7) sowie mindestens einen ersten und/oder zweiten Rastwiderstand (3, 4) aufweisen, wobei die Sockelbasis (100) Führungsaufnahmen (102, 112) für besagte Raststifte (5) umfasst, wobei die Führungsaufnahmen (102, 112) jeweils mindestens eine erste und/oder mindestens eine zweite Rastaussparung (103, 104) für den ersten und/oder zweiten Rastwiderstand (3, 4) aufweisen, insbesondere mindestens erste und zweite Rastaussparungen (103, 104) für den ersten und zweiten Rastwiderstand (3, 4),wobei der Abstand zwischen Tragringrahmen (17) und Sockelboden (101) mit besagten Raststiften (5) justierbar ist,
**dadurch gekennzeichnet, dass**
die Führungsaufnahmen (102) jeweils eine erste Aufnahmeseite (116) und eine gegenüberliegende zweite Aufnahmeseite (117, 118) aufweisen, wobei die mindestens eine erste Rastaussparung (103), insbesondere zwei erste Rastaussparungen, in der ersten Aufnahmeseite (116) und die mindestens eine zweite Rastaussparung (104), insbesondere zwei zweite Rastaussparungen, in der zweiten Aufnahmeseite (117, 118) vorliegen,
wobei der mindestens eine erste Rastwiderstand (3), insbesondere alle ersten Rastwiderstände, in Richtung der korrespondierenden ersten Aufnahmeseite (116) und der mindestens eine zweite Rastwiderstand (4), insbesondere alle zweiten Rastwiderstände, in Richtung der korrespondierenden zweiten Aufnahmeseite (117, 118) geneigt ist und
wobei der Steckdosensockel (1) ausgelegt und eingerichtet ist, von einem ersten in einen zweiten Zustand verstellt zu werden, wobei der Tragringrahmen (17) im ersten Zustand einen ersten Justierabstand (J1) vom Sockelboden (101) und im zweiten Zustand einen zweiten Justierabstand vom Sockelboden (101) aufweist, wobei der zweite Justierabstand größer oder kleiner als der erste Justierabstand ist.

2. Steckdosensockel (1) nach Anspruch 1, **dadurch gekennzeichnet, dass**
der erste Rastwiderstand (3) am Raststiftende (7) oder mit einem ersten Rastwiderstandsabstand beanstandet vom Raststiftende (7) vorliegt und der zweite Rastwiderstand (4) mit einem zweiten Rastwiderstandsabstand beanstandet vom Raststiftende (7) vorliegt, wobei der erste Rastwiderstandsabstand kleiner als der zweite Rastwiderstandsabstand ist.

3. Steckdosensockel (1) nach Anspruch 1 oder 2, **dadurch gekennzeichnet, dass**
die Raststifte (5) jeweils ein, insbesondere L-förmiges, Element, insbesondere Gleitelement (8) aufweisen und die Führungsaufnahmen (102, 112) jeweils eine Rille, insbesondere Gleitrille (115) zur Aufnahme des Element (8), insbesondere Gleitelements (8) umfassen, wobei das Element (8), insbesondere Gleitelement (8) ausgelegt und eingerichtet ist, in der Rille, insbesondere Gleitrille (115) geführt zu werden, insbesondere zu gleiten, insbesondere wobei die Rastwiderstände (3, 4) mit dem Element (8), insbesondere Gleitelement (8), insbesondere einstückig, verbunden sind und/oder wobei die Rille, insbesondere Gleitrille (115) eine Seitenvertiefung (120) und/oder Hinterschneidung umfasst, vorzugsweise einen L-förmigen Querschnitt aufweist.

4. Steckdosensockel (1) nach einem der vorangehenden Ansprüche, **dadurch gekennzeichnet, dass**
die Raststifte (5) jeweils einen Verbindungsabschnitt (15) zwischen und dem restlichen Tragring (2) und dem Gleitelement (8) und/oder den Rastwiderständen (3, 4) aufweisen, insbesondere wobei der Verbindungsabschnitt (15) abgewinkelt oder gebogen ist, und/oder
dass der Tragring (2) überwiegend oder vollständig aus Metall besteht und insbesondere einstückig aus besagtem Metall ausgebildet ist.

5. Steckdosensockel (1) nach einem der vorangehenden Ansprüche, **dadurch gekennzeichnet, dass**
der Tragring (2) mindestens vier Raststifte (5), insbesondere genau vier Raststifte (5), umfasst und die Sockelbasis (100) mindestens vier Führungsaufnahmen (102, 112), insbesondere genau vier Führungsaufnahmen (102, 112), für die mindestens vier Raststifte (5) umfasst, und/oder
dass der mindestens erste und/oder zweite Rastwiderstand (3, 4) eine platten- oder quaderförmige Grundform aufweist.

6. Steckdosensockel (1) nach einem der vorangehenden Ansprüche, **dadurch gekennzeichnet, dass**
die Sockelbasis (100) Führungsaufnahmen in Form von mindestens zwei ersten Führungsaufnahmen (102) an einer ersten Sockelseite (105) und in Form von mindestens zwei zweiten Führungsaufnahmen (112) an einer gegenüberliegenden zweiten Sockelseite (106) umfasst,
vorzugsweise wobei die Sockelbasis (100) zumindest teilweise, insbesondere überwiegend, aus Kunststoff gebildet ist, insbesondere Kunststoff umfassend Glasfasern.

7. Steckdosensockel (1) nach einem der vorangehenden Ansprüche, **dadurch gekennzeichnet, dass**
die Führungsaufnahmen (102, 112) jeweils eine erste Aufnahmeseite (116) aufweisen, wobei jede erste Aufnahmeseite (116) mindestens eine erste Auskragung (109) und/oder mindestens eine erste Anlagefläche (110) aufweist, und/oder
dass die ersten Führungsaufnahmen (102) jeweils eine zweite Aufnahmeseite (117) mit jeweils mindestens einer zweiten Anlagefläche (114) aufweisen, die größer als besagte mindesten eine erste Anlagefläche (110) ist, und/oder
dass die zweiten Führungsaufnahmen (112) jeweils eine zweite Aufnahmeseite (118) mit jeweils mindestens einer zweiten Auskragung (111) und mindestens einer dritten Anlagefläche (113) aufweisen, insbesondere wobei die dritte Anlagefläche (113) kleiner als die zweite Anlagefläche (114) ist.

8. Steckdosensockel (1) nach einem der vorangehenden Ansprüche, **dadurch gekennzeichnet, dass**
mindestens eine, insbesondere zwei, erste Rastaussparungen (103) zwischen den ersten Auskragungen (109) und/oder mindestens eine, insbesondere zwei, zweite Rastaussparungen (104) zwischen den zweiten Auskragungen (111) ausgebildet ist, und/oder
dass mindestens eine erste Auskragung (109) zwischen ersten Rastaussparungen (103) und/oder die mindestens eine zweite Auskragung (111) zwischen zweiten Rastaussparungen (104) ausgebildet ist.

9. Steckdosensockel (1) nach einem der vorangehenden Ansprüche, **dadurch gekennzeichnet, dass**
die erste Aufnahmeseite (116) mindestens zwei erste Rastaussparungen (103) aufweist und die zweite Aufnahmeseite (117, 118) mindestens zwei zweite Rastaussparungen (104) und/oder
die erste Aufnahmeseite (116) mindestens drei erste Auskragungen (109) aufweist und die zweite Aufnahmeseite (118) mindestens drei zweite Auskragungen (111).

10. Steckdosensockel (1) nach einem der vorangehenden Ansprüche, **dadurch gekennzeichnet, dass**
der Winkel zwischen den Neigungen des ersten und zweiten Rastwiderstands (3, 4) kleiner 120° ist, und/oder
dass die erste Auskragung (109) in Richtung der gegenüberliegenden zweiten Aufnahmeseite (117, 118) und die zweite Auskragung (111) in Richtung der gegenüberliegenden ersten Aufnahmeseite (116) geneigt ist, und/oder,
dass die Neigung der ersten Anlagefläche (110) im Wesentlichen der Neigung des ersten Rastwiderstands (3) entspricht und/oder die Neigung der zweiten und dritten Anlagefläche (113, 114) im Wesentlichen der Neigung des zweiten Rastwiderstands (4) entspricht.

11. Steckdosensockel (1) nach einem der vorangehenden Ansprüche, **dadurch gekennzeichnet, dass**
die mindestens eine erste Rastaussparung (103) der mindestens einen zweiten Rastaussparung (104) innerhalb der Führungsaufnahme jeweils zumindest teilweise gegenüberliegt, wobei der Rastaussparungsabstand mindestens einer ersten Rastaussparung (103) vom Sockelboden (101) kleiner als der Rastaussparungsabstand der jeweils gegenüberliegenden zweiten Rastaussparung (104) vom Sockelboden (101) ist, insbesondere wobei mindestens zwei erste Rastaussparungen (103) mindestens zwei zweiten Rastaussparungen (104) gegenüberliegen, wobei der Rastaussparungsabstand jeder ersten Rastaussparung (103) vom Sockelboden (101) jeweils kleiner als der Rastaussparungsabstand der jeweils gegenüberliegenden zweiten Rastaussparung vom Sockelboden (101) ist.

12. Steckdosensockel (1) nach einem der vorangehenden Ansprüche, **dadurch gekennzeichnet, dass**
der erste Rastwiderstand (3) im ersten Zustand in einer ersten Rastaussparung (103) gelagert ist und im zweiten Zustand aus der ersten Rastaussparung (103) herausgelöst ist, insbesondere in keiner ersten Rastaussparung (103) oder zweiten Rastaussparung (104) des Steckdosensockels vorliegt, wobei der zweite Rastwiderstand (4) im zweiten Zustand in einer zweite Rastaussparung (104) gelagert ist.

13. Steckdosensockel (1) nach einem der Ansprüche 1 bis 12, wobei die Steckdosenbasis (100) für eine rastende Steckverbindung mit dem Tragring (2) ausgelegt und eingerichtet ist.

14. Steckdose umfassend den Steckdosensockel (1) nach einem der Ansprüche 1 bis 12 und eine Steckdosenblende.

## Claims

1. A socket base (1) comprising a support ring (2) having a support ring frame (17) and a base plate (100) having a base bottom (101),
wherein the support ring (2) comprises latching pins (5) which each have a latching pin end (7) as well as at least one first and/or second latching resistance (3, 4),
wherein the base plate (100) comprises guide receptacles (102, 112) for said latching pins (5), wherein the guide receptacles (102, 112) each have at least one first and/or at least one second latching recess (103, 104) for the first and/or second latching resistance (3, 4), in particular at least first and second latching recesses (103, 104) for the first and second latching resistance (3, 4), wherein the distance between the support ring frame (17) and the base bottom (101) can be adjusted with said latching pins (5),
**characterized in that**
the guide receptacles (102) each have a first receptacle side (116) and an opposite second receptacle side (117, 118), wherein the at least one first latching recess (103), in particular two first latching recesses, is/are present in the first receptacle side (116) and the at least one second latching recess (104), in particular two second latching recesses, is/are present in the second receptacle side (117, 118),
wherein the at least one first latching resistance (3), in particular all of the first latching resistances, is/are inclined in the direction of the corresponding first receptacle side (116) and the at least one second latching resistance (4), in particular all of the second latching resistances, is/are inclined in the direction of the corresponding second receptacle side (117, 118), and
wherein the socket base (1) is adapted and arranged to be moved from a first state into a second state, wherein the support ring frame (17) has, in the first state, a first adjusting distance (J1) from the base bottom (101) and, in the second state, a second adjusting distance from the base bottom (101), wherein the second adjusting distance is larger or smaller than the first adjusting distance.

2. The socket base (1) according to Claim 1, **characterized in that**
the first latching resistance (3) is present on the latching pin end (7) or spaced with a first latching resistance distance from the latching pin end (7) and the second latching resistance (4) is present spaced with a second latching resistance distance from the latching pin end (7), wherein the first latching resistance distance is smaller than the second latching resistance distance.

3. The socket base (1) according to Claim 1 or 2, **characterized in that**
the latching pins (5) each have a, in particular L-shaped, element, in particular a sliding element (8), and the guide receptacles (102, 112) each comprise a groove, in particular a sliding groove (115), for receiving the element (8), in particular the sliding element (8), wherein the element (8), in particular the sliding element (8), is adapted and arranged to be guided, in particular to slide, in the groove, in particular the sliding groove (115), in particular wherein the latching resistances (3, 4) are connected to the element (8), in particular the sliding element (8), in particular integrally, and/or wherein the groove, in particular the sliding groove (115), comprises a side cavity (120) and/or undercut, preferably has an L-shaped cross-section.

4. The socket base (1) according to any one of the preceding claims, **characterized in that**
the latching pins (5) each have a connecting portion (15) between the remaining support ring (2) and the sliding element (8) and/or the latching resistances (3, 4), in particular wherein the connecting portion (15) is angled or bent, and/or
**in that** the support ring (2) consists predominantly or completely of metal and in particular is formed integrally from said metal.

5. The socket base (1) according to any one of the preceding claims, **characterized in that**
the support ring (2) comprises at least four latching pins (5), in particular exactly four latching pins (5), and the base plate (100) comprises at least four guide receptacles (102, 112), in particular exactly four guide receptacles (102, 112), for the at least four latching pins (5), and/or
**in that** the at least first and/or second latching resistance (3, 4) has a plate-shaped or cuboid basic form.

6. The socket base (1) according to any one of the preceding claims, **characterized in that**
the base plate (100) comprises guide receptacles in the form of at least two first guide receptacles (102) on a first base side (105) and in the form of at least two second guide receptacles (112) on an opposite second base side (106),
preferably wherein the base plate (100) is at least partially, in particular predominantly, formed from plastic, in particular plastic comprising glass fibers.

7. The socket base (1) according to any one of the preceding claims, **characterized in that**
the guide receptacles (102, 112) each have a first receptacle side (116), wherein each first receptacle side (116) has at least one first projection (109) and/or at least one first contact surface (110), and/or
**in that** the first guide receptacles (102) each have a second receptacle side (117) each having at least one second contact surface (114) which is larger than said at least one first contact surface (110), and/or
**in that** the second guide receptacles (112) each have a second receptacle side (118) each having at least one second projection (111) and at least one third contact surface (113), in particular wherein the third contact surface (113) is smaller than the second contact surface (114).

8. The socket base (1) according to any one of the preceding claims, **characterized in that**
at least one, in particular two, first latching recesses (103) between the first projections (109) and/or at least one, in particular two, second latching recesses (104) is/are formed between the second projections (111), and/or
**in that** at least one first projection (109) is formed between first latching recesses (103) and/or
the at least one second projection (111) is formed between second latching recesses (104).

9. The socket base (1) according to any one of the preceding claims, **characterized in that**
the first receptacle side (116) has at least two first latching recesses (103) and the second receptacle side (117, 118) has at least two second latching recesses (104), and/or
the first receptacle side (116) has at least three first projections (109) and the second receptacle side (118) has at least three second projections (111).

10. The socket base (1) according to any one of the preceding claims, **characterized in that**
the angle between the inclinations of the first and second latching resistances (3, 4) is smaller than 120°, and/or
**in that** the first projection (109) is inclined in the direction of the opposite second receptacle side (117, 118) and the second projection (111) is inclined in the direction of the opposite first receptacle side (116), and/or
**in that** the inclination of the first contact surface (110) substantially corresponds to the inclination of the first latching resistance (3) and/or the inclination of the second and third contact surface (113, 114) substantially corresponds to the inclination of the second latching resistance (4).

11. The socket base (1) according to any one of the preceding claims, **characterized in that**
the at least one first latching recess (103) is, in each case, at least partially opposite the at least one second latching recess (104) within the guide receptacle, wherein the latching recess distance of at least one first latching recess (103) from the base bottom (101) is smaller than the latching recess distance of the respective opposite second latching recess (104) from the base bottom (101), in particular wherein at least two first latching recesses (103) are opposite at least two second latching recesses (104), wherein the latching recess distance of each first latching recess (103) from the base bottom (101) is in each case smaller than the latching recess distance of the respective opposite second latching recess from the base bottom (101).

12. The socket base (1) according to any one of the preceding claims, **characterized in that**
the first latching resistance (3) is mounted in the first state in a first latching recess (103) and in the second state is released from the first latching recess (103), in particular is not present in any first latching recess (103) or second latching recess (104) of the socket base, wherein the second latching resistance (4) is mounted in the second state in a second latching recess (104).

13. The socket base (1) according to any one of Claims 1 to 12,
wherein the socket base plate (100) is adapted and arranged for a latching plug connection to the support ring (2).

14. A socket comprising the socket base (1) according to any one of Claims 1 to 12 and a socket cover.

## Revendications

1. Socle de prise de courant (1) comprenant une bague de support (2) avec un cadre de bague de support (17) et une base de socle (100) avec un fond de socle (101),
la bague de support (2) comprenant des broches d'encliquetage (5) qui présentent chacune une extrémité de broche d'encliquetage (7) ainsi qu'au moins une première et/ou une deuxième résistance d'encliquetage (3, 4), la base de socle (100) comprenant des réceptacles de guidage (102, 112) pour lesdites broches d'encliquetage (5), les réceptacles de guidage (102, 112) présentant chacun au moins un premier et/ou au moins un deuxième évidement d'encliquetage (103, 104) pour la première et/ou la deuxième résistance d'encliquetage (3, 4), en particulier au moins un premier et un deuxième évidement d'encliquetage (103, 104) pour la première et la deuxième résistance d'encliquetage (3, 4), la distance entre le cadre de bague de support (17) et le fond de socle (101) pouvant être ajustée avec lesdites broches d'encliquetage (5),
**caractérisé en ce que**
les réceptacles de guidage (102) présentent chacun un premier côté de réception (116) et un deuxième côté de réception opposé (117, 118), l'au moins un premier évidement d'encliquetage (103), en particulier deux premiers évidements d'encliquetage, étant présent dans le premier côté de réception (116) et l'au moins un deuxième évidement d'encliquetage (104), en particulier deux deuxièmes évidements d'encliquetage, étant présent dans le deuxième côté de réception (117, 118), l'au moins une première résistance d'encliquetage (3), en particulier toutes les premières résistances d'encliquetage, étant inclinée en direction du premier côté de réception correspondant (116) et l'au moins une deuxième résistance d'encliquetage (4), en particulier toutes les deuxièmes résistances d'encliquetage, étant inclinée en direction du deuxième côté de réception correspondant (117, 118), et
le socle de prise de courant (1) étant conçu et adapté pour être déplacé d'un premier à un deuxième état, le cadre de bague de support (17) présentant dans le premier état une première distance d'ajustement (J1) par rapport au fond de socle (101) et dans le deuxième état une deuxième distance d'ajustement par rapport au fond de socle (101), la deuxième distance d'ajustement étant supérieure ou inférieure à la première distance d'ajustement.

2. Socle de prise de courant (1) selon la revendication 1, **caractérisé en ce que** la première résistance d'encliquetage (3) est présente à l'extrémité de broche d'encliquetage (7) ou espacée par une première distance de résistance d'encliquetage de l'extrémité de broche d'encliquetage (7) et la deuxième résistance d'encliquetage (4) est présente espacée par une deuxième distance de résistance d'encliquetage de l'extrémité de broche d'encliquetage (7), la première distance de résistance d'encliquetage étant inférieure à la deuxième distance de résistance d'encliquetage.

3. Socle de prise de courant (1) selon la revendication 1 ou 2, **caractérisé en ce que** les broches d'encliquetage (5) présentent chacune un élément, en particulier un élément coulissant (8), en particulier en forme de L, et les réceptacles de guidage (102, 112) comprennent chacun une rainure, en particulier une rainure de coulissement (115) pour recevoir l'élément (8), en particulier l'élément coulissant (8), l'élément (8), en particulier l'élément coulissant (8), étant conçu et adapté pour être guidé, en particulier pour coulisser, dans la rainure, en particulier la rainure de coulissement (115), les résistances d'encliquetage (3, 4) étant en particulier reliées à l'élément (8), en particulier à l'élément de coulissement (8), en particulier d'un seul tenant, et/ou la rainure, en particulier la rainure de coulissement (115) comprenant un renfoncement latéral (120) et/ou une contre-dépouille, de préférence présentant une section transversale en forme de L.

4. Socle de prise de courant (1) selon l'une quelconque des revendications précédentes, **caractérisé en ce que**
les broches d'encliquetage (5) présentent chacune une section de liaison (15) entre le reste de la bague de support (2) et l'élément coulissant (8) et/ou les résistances d'encliquetage (3, 4), la section de liaison (15) étant en particulier coudée ou courbée, et/ou
**en ce que** la bague de support (2) est principalement ou entièrement constituée de métal et est en particulier formée d'un seul tenant en ledit métal.

5. Socle de prise de courant (1) selon l'une quelconque des revendications précédentes, **caractérisé en ce que**
la bague de support (2) comprend au moins quatre broches d'encliquetage (5), en particulier exactement quatre broches d'encliquetage (5), et la base de socle (100) comprend au moins quatre réceptacles de guidage (102, 112), en particulier exactement quatre réceptacles de guidage (102, 112), pour les au moins quatre broches d'encliquetage (5), et/ou
**en ce que** l'au moins une première et/ou deuxième résistance d'encliquetage (3, 4) présente une forme de base en forme de plaque ou de parallélépipède.

6. Socle de prise de courant (1) selon l'une quelconque des revendications précédentes, **caractérisé en ce que**
la base de socle (100) comprend des réceptacles de guidage sous la forme d'au moins deux premiers réceptacles de guidage (102) sur un premier côté de socle (105) et sous la forme d'au moins deux deuxièmes réceptacles de guidage (112) sur un deuxième côté de socle opposé (106),
de préférence, la base de socle (100) étant formée au moins partiellement, en particulier principalement, de matière plastique, en particulier de matière plastique comprenant des fibres de verre.

7. Socle de prise de courant (1) selon l'une quelconque des revendications précédentes, **caractérisé en ce que**
les réceptacles de guidage (102, 112) présentent chacun un premier côté de réception (116), chaque premier côté de réception (116) présentant au moins une première saillie (109) et/ou au moins une première surface d'appui (110), et/ou **en ce que** les premiers réceptacles de guidage (102) présentent chacun un deuxième côté de réception (117) avec chacun au moins une deuxième surface d'appui (114) qui est plus grande que ladite au moins une première surface d'appui (110), et/ou **en ce que** les deuxièmes réceptacles de guidage (112) présentent chacun un deuxième côté de réception (118) avec chacun au moins une deuxième saillie (111) et au moins une troisième surface d'appui (113), la troisième surface d'appui (113) étant en particulier plus petite que la deuxième surface d'appui (114).

8. Socle de prise de courant (1) selon l'une quelconque des revendications précédentes, **caractérisé en ce que**
au moins un, en particulier deux, premiers évidements d'encliquetage (103) sont formés entre les premières saillies (109) et/ou au moins un, en particulier deux, deuxièmes évidements d'encliquetage (104) sont formés entre les deuxièmes saillies (111), et/ou
**en ce qu'**au moins une première saillie (109) est formée entre les premiers évidements d'encliquetage (103) et/ou l'au moins une deuxième saillie (111) est formée entre les deuxièmes évidements d'encliquetage (104).

9. Socle de prise de courant (1) selon l'une quelconque des revendications précédentes, **caractérisé en ce que**
le premier côté de réception (116) présente au moins deux premiers évidements d'encliquetage (103) et le deuxième côté de réception (117, 118) présente au moins deux deuxièmes évidements d'encliquetage (104) et/ou
le premier côté de réception (116) présente au moins trois premières saillies (109) et le deuxième côté de réception (118) présente au moins trois deuxièmes saillies (111).

10. Socle de prise de courant (1) selon l'une quelconque des revendications précédentes, **caractérisé en ce que**
l'angle entre les inclinaisons de la première et de la deuxième résistance d'encliquetage (3, 4) est inférieur à 120°, et/ou
**en ce que** la première saillie (109) est inclinée en direction du deuxième côté de réception opposé (117, 118) et la deuxième saillie (111) est inclinée en direction du premier côté de réception opposé (116), et/ou
**en ce que** l'inclinaison de la première surface d'appui (110) correspond essentiellement à l'inclinaison de la première résistance d'encliquetage (3) et/ou l'inclinaison de la deuxième et de la troisième surface d'appui (113, 114) correspond essentiellement à l'inclinaison de la deuxième résistance d'encliquetage (4).

11. Socle de prise de courant (1) selon l'une quelconque des revendications précédentes, **caractérisé en ce que**
l'au moins un premier évidement d'encliquetage (103) est respectivement au moins partiellement opposé à l'au moins un deuxième évidement d'encliquetage (104) à l'intérieur du logement de guidage, la distance d'évidement d'encliquetage d'au moins un premier évidement d'encliquetage (103) par rapport au fond de socle (101) étant inférieure à la distance d'évidement d'encliquetage du deuxième évidement d'encliquetage (104) respectivement opposé par rapport au fond de socle (101), au moins deux premiers évidements d'encliquetage (103) étant en particulier opposés à au moins deux deuxièmes évidements d'encliquetage (104), la distance d'évidement d'encliquetage de chaque premier évidement d'encliquetage (103) par rapport au fond de socle (101) étant respectivement inférieure à la distance d'évidement d'encliquetage du deuxième évidement d'encliquetage respectivement opposé par rapport au fond de socle (101).

12. Socle de prise de courant (1) selon l'une quelconque des revendications précédentes, **caractérisé en ce que**
la première résistance d'encliquetage (3) est logée dans un premier évidement d'encliquetage (103) dans le premier état et est détachée du premier évidement d'encliquetage (103) dans le deuxième état, en particulier n'est présente dans aucun premier évidement d'encliquetage (103) ou deuxième évidement d'encliquetage (104) du socle de prise de courant, la deuxième résistance d'encliquetage (4) étant logée dans un deuxième évidement d'encliquetage (104) dans le deuxième état.

13. Socle de prise de courant (1) selon l'une quelconque des revendications 1 à 12, la base de prise de courant (100) étant conçue et adaptée pour une connexion enfichable par encliquetage avec la bague de support (2).

14. Prise de courant comprenant le socle de prise de courant (1) selon l'une quelconque des revendications 1 à 12 et un cache de prise de courant.
